# EUROPÄISCHE PATENTSCHRIFT

(11) **EP 1 836 927 B1**
(45) Veröffentlichungstag und Bekanntmachung des Hinweises auf die Patenterteilung: **05.06.2013**
(21) Anmeldenummer: 06005897.1
(22) Anmeldetag: 22.03.2006
(51) Int. Cl.: A47B 5/00, B64D 11/06, B61D 37/00

(54) **Schwenkbarer Tisch**
Foldable table
Table pliable

(43) Veröffentlichungstag der Anmeldung: 26.09.2007
(73) Patentinhaber: Lufthansa Technik AG, 22335 Hamburg (DE)
(72) Erfinder: Carstensen, Sven, 22305 Hamburg (DE)
(74) Vertreter: Glawe, Delfs, Moll

(56) Entgegenhaltungen:
- FR-A- 2 802 070
- US-A1- 2003 047 120
- US-A1- 2003 188 672

## Beschreibung

Die vorliegende Erfindung betrifft einen schwenkbaren Tisch, mit einem Untergehäuse und einer Tischplatte, der von einer Staustellung, bei der die Tischplatte im wesentlichen senkrecht im Untergehäuse angeordnet ist, in eine Nutzstellung verfahrbar ist, bei der die Tischplatte im wesentlichen waagerecht oberhalb des Untergehäuses angeordnet ist und von diesem getragen wird.

In Verkehrsmitteln, insbesondere Flugzeugen, sind häufig verstaubare Tische für die Passagiere vorgesehen. In VIP-Flugzeugen und in der First Class üblicher kommerzieller Passagierflugzeuge wird ein solcher Tisch üblicherweise aus einer neben dem Sitz angeordneten sogenannten Credenza herausgezogen und in eine Nutzstellung geklappt, bei der die Tischplatte teilweise über der Sitzfläche des Sitzes angeordnet ist.

Problematisch ist bei solchen Tischen, dass mehrere schwer miteinander zu kombinierende Anforderungen vereint werden müssen. Die Credenza ist üblicherweise niedriger als die Armlehnen des Sitzes. Dies bedeutet, dass die Tischplatte in der Nutzstellung deutlich oberhalb der Oberkante der Credenza angeordnet sein muss. Es muss also ein Mechanismus vorgesehen sein, der sie in dieser höheren Stellung hält. Die Tischplatte muss frei tragend sein, sämtliche auf die Tischplatte einwirkende Lasten müssen somit in die Credenza abgeleitet werden. Dies kann insbesondere bei einem langen Hebelarm der einwirkenden Kräfte (beispielsweise einem durch den Gang stolpernden Passagier) problematisch sein.

Aus offenkundiger Vorbenutzung ist es bekannt, die Tischplatte eines solchen Tisches schwenkbar an einem Tragarm zu haltern, der in der Nutzstellung aus der Oberkante der Credenza herausragt und so den erforderlichen Abstand zwischen der Oberkante der Credenza und der Tischplatte herstellt. Der Deckel der Credenza ist als eine Art Fanghaken ausgebildet, in seiner Öffnungsstellung kann die vom Passagiersitz wegweisende Kante der Tischplatte in den Deckel eingehakt werden, so dass das auf die Tischplatte einwirkende Kippmoment über diesen Deckel in die Credenza abgeleitet wird.

Diese Lösung ist nachteilig, da sich ein mittels Scharnier an der Credenza befestigter Deckel nicht besonders gut zur Lastaufnahme eignet. Der Erfindung liegt daher die Aufgabe zugrunde, einen Tisch der eingangs genannten Art zu schaffen, der einfach zu handhaben ist und eine gute Stabilität aufweist.

Siehe z.B. FR 2 802 070 A1.

Die Erfindung löst diese Aufgabe bei einem Tisch gemäß dem Oberbegriff des Anspruchs 1 durch folgende Merkmale:
a) es ist wenigstens ein Tragarm vorgesehen, dessen tischplattennaher Endbereich schwenkbar mit der Tischplatte verbunden ist;
b) der tischplattenferne Endbereich des wenigstens einen Tragarms ist über eine Tragarmführung verschieblich mit dem Untergehäuse verbunden;
c) in der Nutzstellung befindet sich der tischplattenferne Endbereich des wenigstens einen Tragarms in einer Tragarmhaltestellung in der Tragarmführung;
d) es ist wenigstens ein Stützarm vorgesehen, dessen beiden Endbereiche jeweils mit der Tischplatte und mit dem wenigstens einen Tragarm verbunden sind, wobei wenigstens eine dieser beiden Verbindungen verschieblich über wenigstens eine Stützarmführung ausgebildet ist;
e) in der Nutzstellung wird die Tischplatte von dem wenigstens einen Tragarm und dem wenigstens einen Stützarm getragen, wobei der Stützarm sich in einer Stützarmhaltestellung befindet.

Zunächst seien einige im Rahmen der Erfindung verwendete Begriffe erläutert.

Der erfindungsgemäße Tisch weist ein Untergehäuse auf. Dieses Untergehäuse dient der Aufnahme der Tischplatte in der Staustellung. In der Nutzstellung der Tischplatte dient es der Aufnahme und Ableitung der auf die Tischplatte einwirkenden Kräfte. Diese werden vorzugsweise ausschließlich über das Untergehäuse in den Untergrund abgeleitet. In der Staustellung ist die Tischplatte im wesentlichen senkrecht im Untergehäuse angeordnet. "Im wesentlichen senkrecht" umfasst im Rahmen der Erfindung Neigungswinkel bis zu 20° zur Senkrechten.

In der Nutzstellung befindet sich die Tischplatte im wesentlichen waagerecht oberhalb des Untergehäuses. "Oberhalb" bedeutet, dass die Tischplatte höher verläuft als eine horizontale Fläche durch die Oberkante des Untergehäuses. Es heißt nicht, dass die Tischplatte ganz oder in wesentlichen Teilen Lotrecht oberhalb des Untergehäuses angeordnet ist, sie kann auch ganz oder in wesentlichen Teilen seitlich davon angeordnet sein. Die Tischplatte wird in der Nutzstellung von dem Untergehäuse getragen. Es sind also vorzugsweise keine weiteren Einrichtungen vorhanden, mittels derer eine Kraftableitung in den Untergrund erfolgt (beispielsweise keine Tischbeine).

Der erfindungsgemäß vorgesehene Tragarm ist im tischplattennahen Endbereich dieses Tragarms schwenkbar mit der Tischplatte verbunden. Die Formulierung "mit der Tischplatte verbunden" schließt im Rahmen der Erfindung ein, dass Tragarme oder die noch zu erläuternden Stützarme mit einer separaten Einrichtung wie beispielsweise einem Tragrahmen verbunden sind, der wiederum die eigentliche Tischplatte trägt. Die Schwenkbarkeit dient dazu, die Tischplatte von der im wesentlichen senkrechten Staustellung in die im wesentlichen waagerechte Nutzstellung schwenken zu können.

Der tischplattenferne Endbereich des wenigstens einen Tragarms ist über eine Tragarmführung verschieblich mit dem Untergehäuse verbunden. Diese Tragarmführung dient dazu, die im wesentlichen senkrecht geschwenkte Tischplatte gemeinsam mit dem schwenkbar daran angeordneten Tragarm aus dem Untergehäuse herausziehen zu können bzw. zurück in die Staustellung hineinschieben zu können.

In der Nutzstellung der Tischplatte befindet sich der tischplattenferne Endbereich des wenigstens einen Tragarms in einer Tragarmhaltestellung in der Tragarmführung. Dies bedeutet, dass der Tragarm in dieser Haltestellung so fixiert ist, dass er bei üblicher Nutzung des Tisches in der Tragarmführung nicht zurückrutschen kann. Er kann beispielsweise in der Tragarmhaltestellung verriegelbar und/oder verrastbar sein.

Der Tragarm ragt in der Nutzstellung über die Oberkante des Untergehäuses hinaus und bewirkt so, dass die Tischplatte in der Nutzstellung in einer Ebene oberhalb dieser Oberkante des Untergehäuses angeordnet ist.

In der Nutzstellung muss die Tischplatte durch wenigstens ein zweites Halteelement fixiert werden, damit sie gegenüber dem Tragarm nicht mehr verschwenkbar ist. Erfindungsgemäß ist nun vorgesehen, dass dies mittels wenigstens eines Stützarms erfolgt, dessen beiden Endbereiche jeweils mit der Tischplatte und mit dem wenigstens einem Tragarm verbunden sind, wobei wenigstens eine dieser beiden Verbindungen verschieblich über wenigstens eine Stützarmführung ausgebildet ist. Beispielsweise kann der Stützarm mit seinem tischplattenfernen Ende schwenkbar am Tragarm angeordnet sein, das tischplattennahe Ende des Stützarms ist in einer Stützarmführung an der Tischplatte angeordnet. In dieser Stützarmführung ist das tischplattennahe Ende des Stützarms verschieblich. In der Staustellung der Tischplatte sind Tragarm und Stützarm im wesentlichen parallel zueinander dicht bei der Tischplatte angeordnet. Zieht man die Tischplatte heraus und beginnt anschließend das Verschwenken in die im wesentlichen horizontale.Nutzstellung, schwenkt der Stützarm aus der parallelen Stellung zum Tragarm weg, sein tischplattennahes Ende verschiebt sich in der Führung an der Tischplatte. In der horizontalen Nutzstellung gerät das tischplattennahe Ende des Stützarms vorzugsweise an einen Anschlag der Stützarmführung und ist in der im Patentanspruch 1 so bezeichneten Stützarmhaltestellung.

Erfindungsgemäß wird die Tischplatte oberhalb der Oberkante des Untergehäuses in ihrer Nutzstellung gemeinsam vom Tragarm und Stützarm gehalten. Der Stützarm ist dabei so an Tragarm und Tischplatte befestigt, dass in der Nutzstellung Tragarm, Stützarm und ein Teilabschnitt der Tischplatte ein Dreieck aufspannen. Die tischplattenseitigen Endbereiche des Tragarms und Stützarms nehmen die auf die Tischplatte wirkenden Kräfte auf und leiten diese über den Tragarm in das Untergestell ab. Beim Schwenken der Tischplatte in die im wesentliche senkrechte Stellung schwenkt der Stützarm in der geschilderten Variante an den Tragarm heran. Das tischplattenseitige Ende des Stützarms verschiebt sich in der Führung in Richtung auf den Tragarm.

Alternativ kann beispielsweise das tischplattenseitige Ende des Stützarms schwenkbar an der Tischplatte angebracht sein, das tragarmseitige Ende ist in einer Führung des Tragarms verschieblich angeordnet. Auch in diesem Fall geraten Stützarm und Tragarm beim Verschwenken der Tischplatte in die im wesentlichen senkrechte Stellung im wesentlichen parallel zueinander.

Stützarm und Tragarm weisen eine zusammenwirkende Kinematik auf, die durch einfaches Verschwenken der Tischplatte in die Nutzstellung ein Dreieck aus Stützarm und Tragarm aufspannt, das die Tischplatte trägt.

Die im Untergehäuse verstaute Tischplatte weist in der Staustellung vorzugsweise eine Neigung zur Senkrechten auf, die vorzugsweise zwischen 1 und 20°, weiter vorzugsweise im Bereich von 2 bis 5°, besonders bevorzugt im Bereich von etwa 3° liegt. Diese Neigung ist bevorzugt in Richtung auf den Passagiersitz hin ausgeführt. Sie erleichtert das Herausziehen der Tischplatte durch den neben dem Untergehäuse sitzenden Passagier und erlaubt die Installation des Tisches nahe der Außenwand eines Flugzeuges auch dann, wenn sich die Außenhaut nach oben hin einwärts krümmt. Von besonderer Bedeutung für die Handhabbarkeit des Tisches ist eine solche Neigung dann, wenn der Tisch beispielsweise auf dem Oberdeck einer Boeing 747 installiert ist, da sich dort die Flugzeugaußenhaut nach oben hin besonders stark einwärts neigt.

Die Tischplatte ist besonders bevorzugt auf einem Tragrahmen angeordnet, beispielsweise mit einem Tragrahmen bevorzugt aus Metall verklebt und/oder verschraubt. Der Tragrahmen weist bei dieser bevorzugten Ausführungsform die erforderlichen Elemente zur Verbindung mit dem Tragarm und dem Stützarm auf, beispielsweise eine Schwenkverbindung mit dem Tragarm und eine Stützarmführung für eine verschiebliche Aufnahme des tischplattenseitigen Endbereichs des Stützarms.

Die Stützarmführung weist bevorzugt einen Anschlag auf, an dem der Stützarm in der Stützarmhaltestellung (die Tischplatte befindet sich dabei in der Nutzstellung) anliegt. Dieser Anschlag kann beispielsweise ein Endanschlag in einer Führungsschiene sein, in der das tischplattenseitige Ende des Stützarms läuft.

Der Tragarm ist vorzugsweise in der Tragarmhaltestellung verriegelbar und/oder verrastbar. Dies bewirkt einen sicheren Halt des Tisches in der Nutzstellung. Die schwenkbare Verbindung zwischen der Tischplatte und dem wenigstens einen Tragarm kann wenigstens einen Winkelanschlag aufweisen. Dieser Winkelanschlag kann den möglichen Schwenkwinkel der Tischplatte begrenzen, so dass diese nicht über die im wesentlichen senkrechte Stellung hinaus bzw. unter die im wesentlichen horizontale Stellung herab geschwenkt werden kann. Die Tragarmführung im Untergehäuse weist bevorzugt einen Höhenanschlag auf, so dass der Tragarm nicht über die obere Tragarmhaltestellung hinaus herausgezogen werden kann.

Häufig ist ein Tisch gewünscht, dessen nutzbare Breite grö-ßer ist als die Höhe des Untergehäuses. In diesem Fall ist bevorzugt ein Falttisch vorgesehen, bei dem die Tischplatte aus zwei oder mehr Teilplatten gebildet ist, die zwischen einer übereinanderliegenden Anordnung und einer nebeneinanderliegenden Anordnung verfahrbar, insbesondere verschwenkbar sind. In der Staustellung können die Teilplatten übereinandergefaltet im Untergehäuse ruhen. Beim Verfahren in die Nutzstellung werden zunächst die noch übereinanderliegenden Teilplatten herausgezogen und in die horizontale Nutzstellung verschwenkt, anschließend werden die beiden Teilplatten in ihre nebeneinanderliegende Anordnung verfahren, insbesondere verschwenkt. Bei dieser Ausführungsform ist ein Tragrahmen bevorzugt nur unter einer Teilplatte angeordnet. Um die Stabilität des Tisches insgesamt zu erhöhen, ist es bevorzugt vorgesehen, dass der Tragrahmen einen ausziehbaren Stützgriff aufweist, der sich in der ausgezogenen Stellung unter die zweite Teilplatte schiebt und diese unterstützt.

In der Nutzstellung liegt die Höhendifferenz zwischen der Oberkante der Tischplatte und der Oberkante des Untergehäuses bevorzugt zwischen 50 und 300 mm, weiter bevorzugt zwischen 100 und 200 mm.

Ein Ausführungsbeispiel der Erfindung wird im folgenden anhand der Zeichnungen erläutert. Darin zeigen:
- Fig. 1: schematisch einen Querschnitt durch einen erfindungsgemäßen Tisch im Stauzustand;
- Fig. 2: schematisch einen Querschnitt im Nutzzustand;
- Fig. 3: die im Untergehäuse angeordnete Tragkoflstruktion für den Tisch mit dem Tragrahmen für die Tischplatte;
- Fig. 4: in einem Ausschnitt aus Figur 3 den Winkelanschlag für den Tragarm;
- Fig. 5: in einem Ausschnitt aus Figur 3 die Verriegelung des Tragarms in der Tragarmhaltestellung;
- Fig. 6: in einem Ausschnitt aus Figur 3 den Anschlag eines Stützarms in der Nutzstellung der Tischplatte;
- Fig. 7: schematisch eine Aufsicht von oben auf den erfindungsgemäßen Tisch in der Nutzstellung.

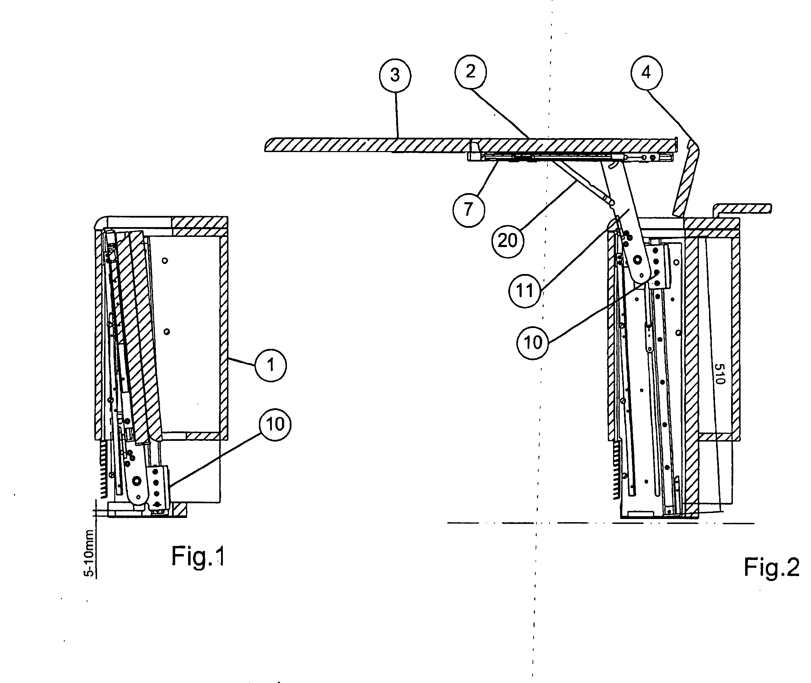

In einem insgesamt mit 1 bezeichneten Untergehäuse (Credenza) ist ein Tisch angeordnet, der zwei gegeneinander klappbare Tischteilplatten 2, 3 aufweist. In der in Figur 1 gezeigten Staustellung befinden sich diese Tischplatten 2, 3 übereinandergeklappt im Inneren des Untergehäuses 1 in einem Winkel von etwa 3° zur Senkrechten.

Figur 2 zeigt den Tisch in der Nutzstellung. Die Oberseite der Credenza ist mit einem Deckel 4 verschlossen. Nach dem Ausklappen des Deckels können die Tischplatten 2, 3 aus der Credenza herausgezogen werden. In der Nutzstellung wird der Tisch gehalten von Tragarmen 11 und Stützarmen 20, die an einem Tragrahmen 7 angreifen, mit dem wiederum die Tischplatte 2 verbunden ist

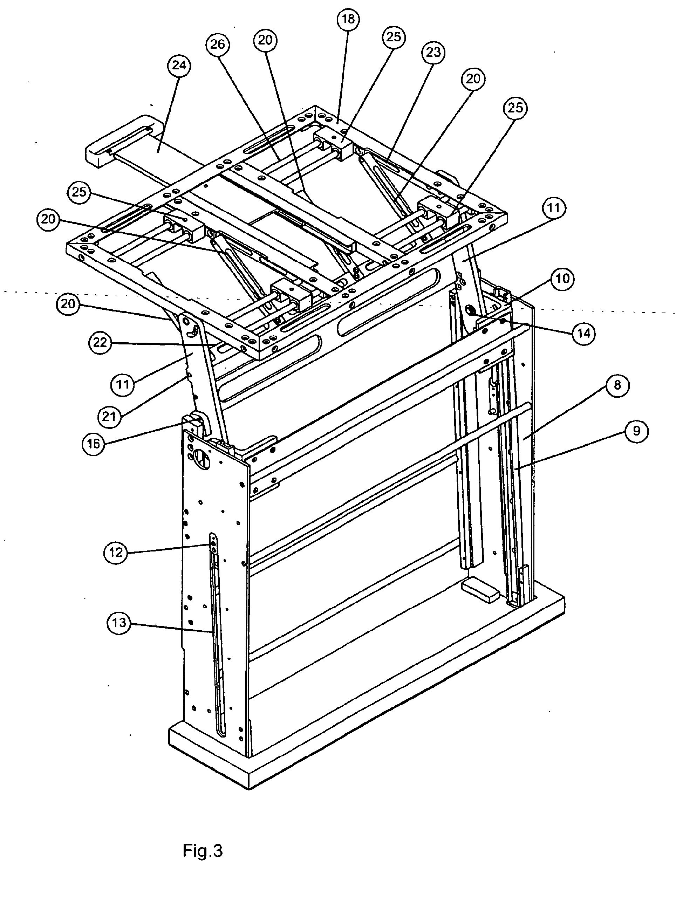

Figur 3 zeigt das in der Credenza angeordnete Traggestell sowie die Tragmechanik der Tischplatten einschließlich des Tragrahmens. In dem insgesamt mit 8 bezeichneten Traggestell sind Führungsschienen 9 angeordnet, in denen ein Gleitrahmen 10 verschieblich gelagert ist, der wiederum die Tragarme 11 trägt. Die Führung des Gleitrahmens 10 in den Führungsschienen 9 ist kugelgelagert, um das Ein- und Ausschieben zu erleichtern. Der obere Anschlag des Gleitrahmens 10 und damit der Tragarme 11 wird bestimmt durch Führungsstücke 12 des Gleitrahmens 10, die in Führungen 13 des Traggestells 8 geführt sind. In der in Figur 3 gezeigten Stellung befindet sich der Gleitrahmen 10 und die Tragarme 11 in der oberen Endstellung, der sogenannten Tragarmhaltestellung.

Das Herausziehen der Tischkonstruktion aus dem Untergestell wird unterstützt durch in der Zeichnung nicht dargestellte Federn, die das Herausziehen gegen die Schwerkraft unterstützen.

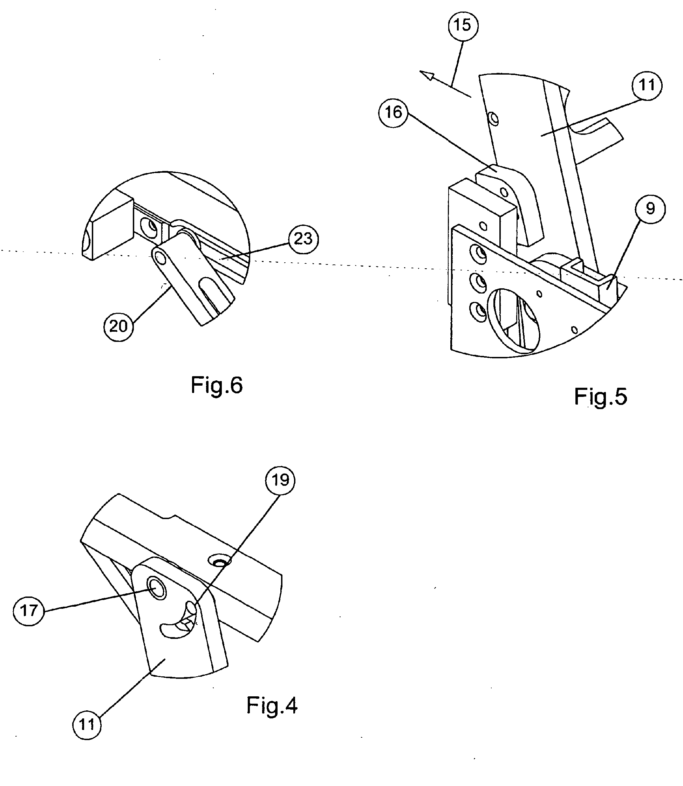

Die Tragarme 11 sind an dem Gleitrahmen 10 bei 14 um einen geringen Winkel schwenkbar gelagert. Nach dem Herausziehen des Tisches aus der Credenza und dem Erreichen der oberen Endstellung (Tragarmhaltestellung) von Gleitrahmen 10 und Tragarmen 11 können die Tragarme 11 geringfügig in Richtung des Pfeils 15 (Figur 5) gekippt werden, so dass Tragarme 11 und Gleitrahmen 10 durch die Verriegelungsstücke 16 in der Tragarmhaltestellung fixiert werden. Diese Verriegelungsstücke 16 haken über eine Oberkante des Traggestells 8 und verhindern, dass der Gleitrahmen 10 und Tragarme 11 mitsamt dem Tisch durch die Wirkung der Schwerkraft wieder in der Führungsschiene 9 herunter rutschen. Die Verriegelungsstücke 16 weisen bevorzugt Hinterschnitte auf, so dass sie nur durch leichtes Anheben von Tragarmen 11 entriegelt werden können.

Die Tragarme 11 sind bei 17 schwenkbar mit einem Tragrahmen 18 für die Tischplatte verbunden. Bei 19 gezeigte Winkelbegrenzer begrenzen den Schwenkwinkel des Tragrahmens 18 relativ zu den Tragarmen 11, so dass der Tragrahmen 18 nicht über die horizontale Nutzstellung hinaus weiter nach unten geschwenkt werden kann und ferner beim Hochklappen des Tragrahmens 18 der Schwenkwinkel dann begrenzt wird, wenn der Tragrahmen 18 im wesentlichen mit den Tragarmen 11 fluchtet.

An den Tragarmen 11 sind schwenkbar insgesamt vier Stützarme 20 angeordnet. Die Schwenkverbindung mit den Tragarmen 11 erfolgt bei 21 über eine den vier Stützarmen 20 gemeinsame Basisleiste 22. Die tischplattenseitigen Endbereiche der Stützarme 20 sind im Tragrahmen 18 in Führungen 23 verschieblich gelagert. Diese Führungen 23 sind so bemessen, dass die Stützarme in der im wesentlichen horizontalen Nutzstellung einerseits und in der hochgeklappten Stellung (im wesentlichen parallel zu den Tragarmen 11) andererseits jeweils einen Endanschlag erreichen.

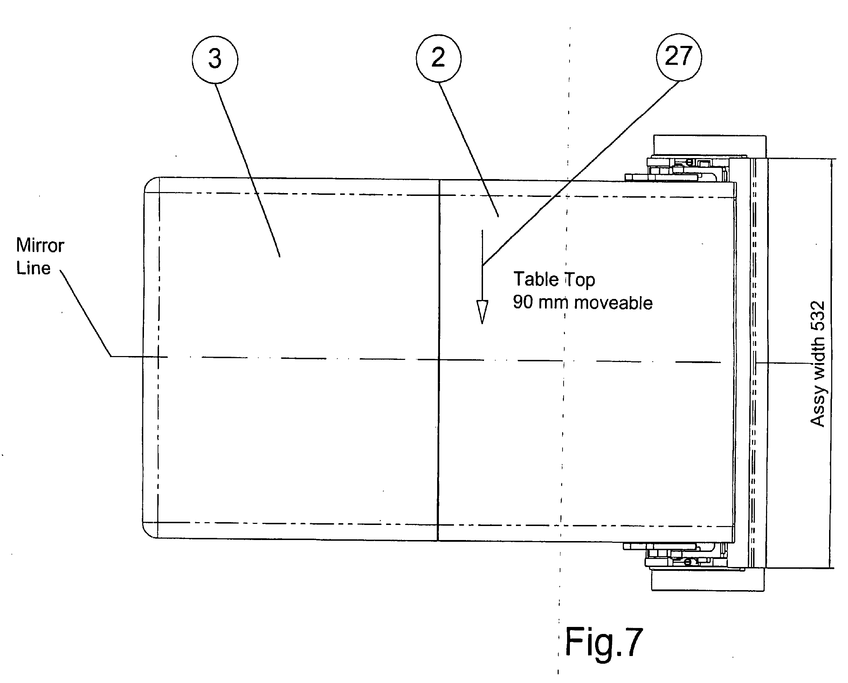

Der Tragrahmen 18 weist einen ausziehbaren Stützgriff 24 auf. Dieser Stützgriff 24 dient im herausgezogenen Zustand dem Abstützen der zweiten Tischplattenhälfte 3 in der Nutzstellung. Die mit dem Tragrahmen 18 verbundene Tischplattenhälfte 2 ist mit vier Gleitstücken 25 verbunden, insbesondere verschraubt. Diese Gleitstücke 25 sind verschieblich auf Stäben 26 angeordnet. Auf diese Art und Weise kann die Tischplatte in der Nutzstellung relativ zum Tragrahmen 18 vor- und zurückgeschoben werden, wie der Pfeil 27 in Figur 7 andeutet.

Das Herausziehen des Tisches aus der in Figur 1 gezeigten Staustellung in die in Figur 2 gezeigte Nutzstellung geschieht wie folgt.

Zunächst wird der Deckel 4 der Credenza geöffnet. Vorzugsweise am Stützgriff 24 kann der gesamte Tisch ergriffen und in Richtung der Führungsschiene 9 nach oben herausgezogen werden. Wenn der Gleitrahmen 10 mit den Tragarmen 11 den oberen Endanschlag erreicht hat, können die Tragarme 11 leicht in Richtung des Pfeils 15 (Figur 5) kippen, so dass die Verriegelungsstücke 16 die Tragarme 11 in der Tragarmhaltestellung verriegeln. Anschließend wird der Tragrahmen 18 mit den darauf angeordneten Tischplatten 2, 3 in die in Figur 3 gezeigte im wesentliche waagerechte Stellung heruntergeklappt. In dieser waagerechten Nutzstellung geraten die tischplattenseitigen Endbereiche der Stützarme 20 in der Führung 23 an ihren Endanschlag, so dass ein weiteres Herabkippen des Tragrahmens 18 mit den darauf angeordneten Tischplatten 2, 3 verhindert wird. Anschließend kann der Stützgriff 24 herausgezogen und die Tischplatte 3 in die in Figur 2 gezeigte Stellung umgeklappt werden. Der Tisch ist jetzt zur Nutzung bereit. In der Nutzstellung können die Tischplatten 2, 3 in Richtung des Pfeils 27 in Figur 7 hin und her geschoben werden. Dabei gleiten die Gleitstücke 25 auf den Stäben 26.

## Patentansprüche

1. Tisch, mit einem Untergehäuse (1) und einer Tischplatte (2, 3), der von einer Staustellung, bei der die Tischplatte (2, 3) im Wesentlichen senkrecht im Untergehäuse (1) angeordnet ist, in eine Nutzstellung verfahrbar ist, bei der die Tischplatte (2, 3) im Wesentlichen waagerecht oberhalb des Untergehäuses (1) angeordnet ist und von diesem getragen wird, gekennzeich net durch folgende Merkmale:
a) es ist wenigstens ein Tragarm (11) vorgesehen, dessen tischplattennaher Endbereich schwenkbar mit der Tischplatte verbunden ist;
b) der tischplattenferne Endbereich des wenigstens einen Tragarms (11) ist über eine Tragarmführung verschieblich mit dem Untergehäuse (1) verbunden;
c) in der Nutzstellung befindet sich der tischplattenferne Endbereich des wenigstens einen Tragarms (11) in einer Tragarmhaltestellung in der Tragarmführung;
d) es ist wenigstens ein Stützarm (20) vorgesehen, dessen beiden Endbereiche jeweils mit der Tischplatte und mit dem wenigstens einen Tragarm (11) verbunden sind, wobei wenigstens eine dieser beiden Verbindungen verschieblich über wenigstens eine Stützarmführung (23) ausgebildet ist;
e) in der Nutzstellung wird die Tischplatte von dem wenigstens einen Tragarm (11) und dem wenigstens einen Stützarm (20) getragen, wobei der Stützarm (20) sich in einer Stützarmhaltestellung befindet.

2. Tisch nach Anspruch 1, **dadurch gekennzeichnet, dass** die Tischplatte (2, 3) in der Staustellung einen Neigungswinkel zur senkrechten Fläche aufweist, der vorzugsweise zwischen 1 Grad und 20 Grad, und weiter vorzugsweise im Bereich von 2 Grad bis 5 Grad liegt.

3. Tisch nach Anspruch 1 oder 2, **dadurch gekennzeichnet, dass** die Tischplatte (2, 3) einen Tragrahmen (18) umfasst, über den die Tischplatte (2, 3) mit dem wenigstens einen Tragarm (11) und dem wenigstens einen Stützarm (20) verbunden ist.

4. Tisch nach einem der Ansprüche 1 bis 3, durchgehend **dadurch gekennzeichnet, dass** die einer verschieblichen Verbindung zugehörige wenigstens eine Stützarmführung in oder an der Tischplatte (2, 3) angeordnet ist und eine schwenkbare Verbindung zwischen dem wenigstens einen Stützarm (20) und dem wenigstens einen Tragarm (11) ausgebildet ist.

5. Tisch nach einem der Ansprüche 1 bis 3, **dadurch gekennzeichnet, dass** die einer verschieblichen Verbindung zugehörige wenigstens eine Stützarmführung in dem wenigstens einen Tragarm (11) angeordnet ist und eine schwenkbare Verbindung zwischen dem wenigstens einen Stützarm (20) und der Tischplatte ausgebildet ist.

6. Tisch nach einem der Ansprüche 1 bis 5, **dadurch gekennzeichnet, dass** die Stützarmführung (23) einen Anschlag aufweist, an dem der Stützarm (20) in der Stützarmhaltestellung anliegt.

7. Tisch nach einem der Ansprüche 1 bis 6, **dadurch gekennzeichnet, dass** der Tragarm (11) in der Tragarmhaltestellung verriegelbar und/oder verrastbar ist.

8. Tisch nach einem der Ansprüche 1 bis 7, **dadurch gekennzeichnet, dass** die schwenkbare Verbindung zwischen der Tischplatte (2, 3) und dem wenigstens einen Tragarm (11) wenigstens einen Winkelanschlag (19) aufweist.

9. Tisch nach einem der Ansprüche 1 bis 8, **dadurch gekennzeichnet, dass** die Tragarmführung einen Höhenanschlag (12) aufweist.

10. Tisch nach einem der Ansprüche 1 bis 9, **dadurch gekennzeichnet, dass** die Tischplatte (2, 3) wenigstens zwei Teilplatten umfasst, die zwischen einer übereinander liegenden Anordnung und einer nebeneinander liegenden Anordnung verfahrbar sind.

11. Tisch nach einem der Ansprüche 3 bis 10, **dadurch gekennzeichnet, dass** der Tragrahmen (18) wenigstens einen Stützgriff (24) aufweist, der zum Abstützen der Tischplatte ausziehbar ist.

12. Tisch nach einem der Ansprüche 1 bis 11, **dadurch gekennzeichnet, dass** in der Nutzstellung die Höhendifferenz zwischen der Oberkante der Tischplatte (2,3) und der Oberkante des Untergehäuses (1) zwischen 50mm und 300mm, vorzugsweise zwischen 100mm und 200mm liegt.

## Claims

1. Table having a lower housing (1) and a tabletop (2, 3) which can be moved from a storage position, in which said tabletop (2, 3) is arranged substantially perpendicularly within the lower housing (1), into a usable position in which said tabletop (2, 3) is arranged substantially horizontally above the lower housing (1) and is carried by the latter, **characterised by** the following features:
a) at least one carrier arm (11) is provided, of which the end region close to the tabletop is pivotably connected to said tabletop;
b) that end region of the at least one carrier arm (11) which is remote from the tabletop is connected to the lower housing (1) in a displaceable manner via a carrier-arm guide;
C) in the usable position, that end region of the at least one carrier arm (11) which is remote from the table top is located in a carrier-arm retaining position within the carrier-arm guide;
d) at least one supporting arm (20) is provided, the two end regions of which are connected to the tabletop and to the at least one carrier arm (11) respectively, at least one of these two connections being constructed so as to be displaceable via at least one supporting-arm guide (23);
e) in the usable position, the table top is carried by the at least one carrier arm (11) and the at least one supporting arm (20), said supporting arm (20) being located in a supporting-arm retaining position.

2. Table according to claim 1, **characterised in that**, in the storage position, the tabletop (2, 3) has an angle of inclination, relative to the perpendicular face, which preferably lies between 1 degree and 20 degrees, and more preferably within the range from 2 degrees to 5 degrees.

3. Table according to claim 1 or 2, **characterised in that** the tabletop (2, 3) comprises a carrier frame (18) via which said tabletop (2, 3) is connected to the at least one carrier arm (11) and the at least one supporting arm (20).

4. Table according to one of claims 1 to 3, generally **characterised in that** the at least one supporting-arm guide belonging to a displaceable connection is arranged in or on the tabletop (2, 3), and a pivotable connection is formed between the at least one supporting arm (20) and the at least one carrier arm (11).

5. Table according to one of claims 1 to 3, **characterised in that** the at least one supporting-arm guide belonging to a displaceable connection is arranged in the at least one carrier arm (11), and a pivotable connection is formed between the at least one supporting arm (20) and the tabletop.

6. Table according to one of claims 1 to 5, **characterised in that** the supporting-arm guide (23) has a stop against which the supporting arm (20) rests in the supporting-arm retaining position.

7. Table according to one of claims 1 to 6, **characterised in that** the carrier arm (11) can be locked and/or latched in the carrier-arm retaining position.

8. Table according to one of claims 1 to 7, **characterised in that** the pivotable connection between the tabletop (2, 3) and the at least one carrier arm (11) has at least one angle stop (19).

9. Table according to one of claims 1 to 8, **characterised in that** the carrier-arm guide has a height stop (12).

10. Table according to one of claims 1 to 9, **characterised in that** the tabletop (2, 3) comprises at least two partial panels which can be moved between an arrangement in which they lie one above the other and an arrangement in which they lie side by side.

11. Table according to one of claims 3 to 10, **characterised in that** the carrier frame (18) has at least one supporting handle (24) which can be pulled out for the purpose of supporting the tabletop.

12. Table according to one of claims 1 to 11, **characterised in that**, in the usable position, the difference in height between the upper edge of the tabletop (2, 3) and the upper edge of the lower housing (1) lies between 50 mm and 300 mm, and preferably between 100 mm and 200 mm.

## Revendications

1. Table comprenant un logement inférieur (1) et un plateau de table (2, 3), qui peut être déplacée d'une position de rangement, dans laquelle le plateau de la table (2, 3) est agencé sensiblement verticalement dans le logement inférieur (1), à une position d'utilisation, dans laquelle le plateau de la table (2, 3) est agencé sensiblement horizontalement au-dessus du logement inférieur (1) et soutenu par celui-ci, **caractérisée par** les caractéristiques suivantes :
a) il est prévu au moins une console (11), dont la zone d'extrémité proche du plateau de la table est reliée avec le plateau de la table de façon basculante ;
b) la zone d'extrémité distante du plateau de la table de l'au moins une console (11) est reliée avec le logement inférieur (1) de façon coulissante par le biais d'un guide de la console ;
c) dans la position d'utilisation, la zone d'extrémité distante du plateau de la table de l'au moins une console (11) se trouve dans une position de retenue de la console dans le guide de la console ;
d) il est prévu au moins un bras de support (20) dont les deux zones d'extrémité sont reliées respectivement avec le plateau de la table et avec l'au moins une console (11), étant entendu qu'au moins une de ces deux liaisons est réalisée de façon coulissante par le biais d'au moins un guide du bras de support (23) ;
e) dans la position d'utilisation, le plateau de la table est soutenu par l'au moins une console (11) et l'au moins un bras de support (20), étant entendu que le bras de support (20) se trouve dans une position de retenue du bras de support.

2. Table selon la revendication 1, **caractérisée en ce que** dans la position de rangement, le plateau de la table (2, 3) présente un angle d'inclinaison par rapport à la surface verticale qui est compris de préférence entre 1 degré et 20 degrés, et encore plus de préférence dans une marge de 2 degrés à 5 degrés.

3. Table selon la revendication 1 ou 2, **caractérisée en ce que** le plateau de la table (2, 3) comprend un cadre porteur (18) par le biais duquel le plateau de la table (2, 3) est relié avec l'au moins une console (11) et l'au moins un bras de support (20).

4. Table selon l'une des revendications 1 à 3, caractérisée de façon continue en ce que l'au moins un guide du bras de support correspondant à une liaison coulissante est agencé dans ou sur le plateau de la table (2, 3) et en ce qu'une liaison basculante est réalisée entre l'au moins un bras de support (20) et l'au moins une console (11).

5. Table selon l'une des revendications 1 à 3, **caractérisée en ce que** l'au moins un guide du bras de support correspondant à une liaison coulissante est agencé dans l'au moins une console (11) et **en ce qu'**une liaison basculante est réalisée entre l'au moins un bras de support (20) et le plateau de la table.

6. Table selon l'une des revendications 1 à 5, **caractérisée en ce que** le guide du bras de support (23) présente une butée sur laquelle le bras de support (20) prend appui dans la position de retenue du bras de support.

7. Table selon l'une des revendications 1 à 6, **caractérisée en ce que** la console peut être verrouillée et/ou enclenchée dans la position de retenue de la console (11).

8. Table selon l'une des revendications 1 à 7, **caractérisée en ce que** la liaison basculante entre le plateau de la table (2, 3) et l'au moins une console (11) présente au moins une butée d'angle (19).

9. Table selon l'une des revendications 1 à 8, **caractérisée en ce que** le guide de la console présente une butée en hauteur (12).

10. Table selon l'une des revendications 1 à 9, **caractérisée en ce que** le plateau de la table (2, 3) comprend au moins deux plateaux partiels qui peuvent être déplacés entre un agencement en superposition l'un au-dessus de l'autre et un agencement en juxtaposition l'un à côté de l'autre.

11. Table selon l'une des revendications 3 à 10, **caractérisée en ce que** le cadre porteur (18) présente au moins une poignée de support (24) qui peut être déployée afin de soutenir le plateau de la table.

12. Table selon l'une des revendications 1 à 11, **caractérisée en ce que** dans la position d'utilisation, la différence de hauteur entre l'arête supérieure du plateau de la table (2, 3) et l'arête supérieure du logement inférieur (1) est comprise entre 50 mm et 300 mm, et de préférence entre 100 mm et 200 mm.
